(19) Europäisches Patentamt
European Patent Office
Office européen des brevets

(11) EP 2 289 324 B1

(12) # EUROPÄISCHE PATENTSCHRIFT

(45) Veröffentlichungstag und Bekanntmachung des Hinweises auf die Patenterteilung:
**12.09.2012 Patentblatt 2012/37**

(51) Int Cl.:
***A01N 43/653*** *(2006.01)*

(21) Anmeldenummer: **10180042.3**

(22) Anmeldetag: **04.03.2003**

(54) **Fungizide Mischungen auf der Basis von Triazolen**

Fungicide mixtures based on triazoles

Mélanges fongicides à base de triazoles

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**LT LV**

(30) Priorität: **07.03.2002 DE 10209937**

(43) Veröffentlichungstag der Anmeldung:
**02.03.2011 Patentblatt 2011/09**

(62) Dokumentnummer(n) der früheren Anmeldung(en) nach Art. 76 EPÜ:
**07102907.8 / 1 782 691**
**03704704.0 / 1 484 975**

(73) Patentinhaber: **BASF SE**
**67056 Ludwigshafen (DE)**

(72) Erfinder:
- **Ammermann, Eberhard**
  **64646 Heppenheim (DE)**
- **Stierl, Reinhard**
  **83345, Kaohsiung County (TW)**
- **Lorenz, Gisela**
  **67434 Neustadt (DE)**
- **Strathmann, Siegfried**
  **67117 Limburgerhof (DE)**
- **Schelberger, Klaus**
  **67161 Gönnheim (DE)**
- **Spadafora, James**
  **Sugar Land, TX 77478 (US)**
- **Christen, Thomas**
  **67125 Dannstadt (DE)**

(56) Entgegenhaltungen:
**WO-A-98/47367**

EP 2 289 324 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft fungizide Mischungen, enthaltend

(1) 2-[2-(1-Chlorcyclopropyl)-3-(2-chlorphenyl)-2-hydroxypropyl]-2,4-dihydro-[1,2,4]-triazol-3-thion (Prothioconazole) der Formel I oder dessen Salze oder Addukte

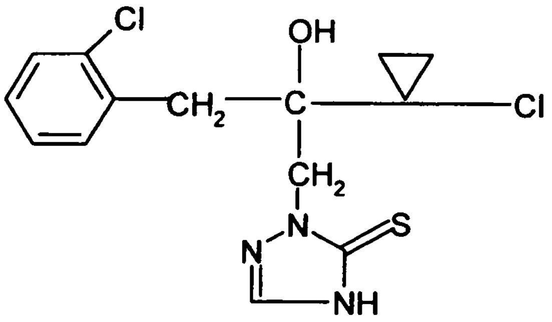

(I)

und

(13) Myclobutanil der Formel XIII

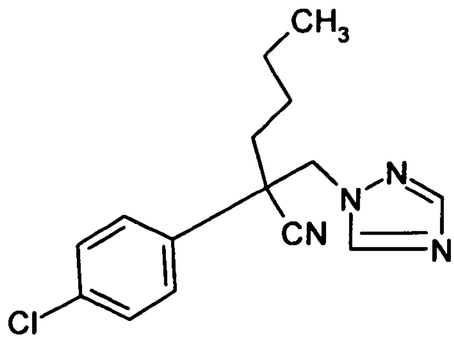

(XIII)

in einer synergistisch wirksamen Menge.

Außerdem betrifft die Erfindung ein Verfahren zur Bekämpfung von Schadpilzen mit einer Mischung der Verbindung I mitder Verbindung XIII (optional zusammen mit einem weiteren Triazol) und die Verwendung der Verbindung I mitder Verbindung XIII (optional zusammen mit einem weiteren Triazol) zur Herstellung derartiger Mischung sowie Mittel, die diese Mischung enthalten.

Weitere Triazole sind ausgewählt aus der Gruppe bestehend aus

(2) Epoxiconazole der Formel II

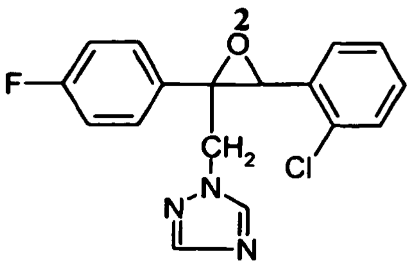

(II)

(3) Metconazole der Formel III

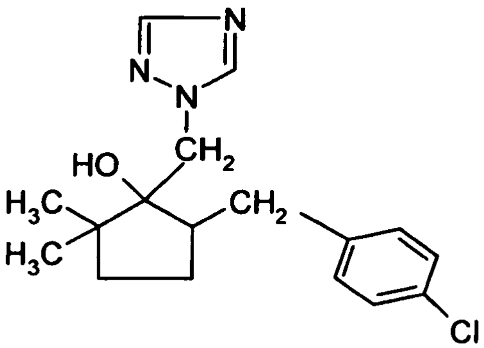

(III)

oder
(4) Propiconazole der Formel IV

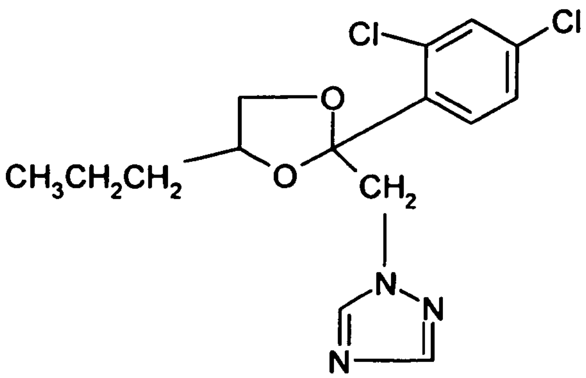

(IV)

oder
(5) Fluquinconazole der Formel V

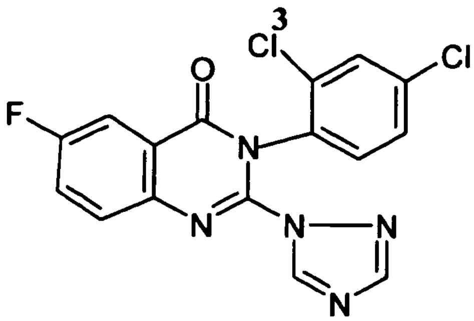

(V)

oder
(6) Penconazole der Formel VI

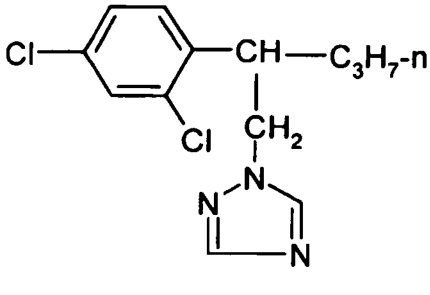

(VI)

oder

(7) Difenconazole der Formel VII

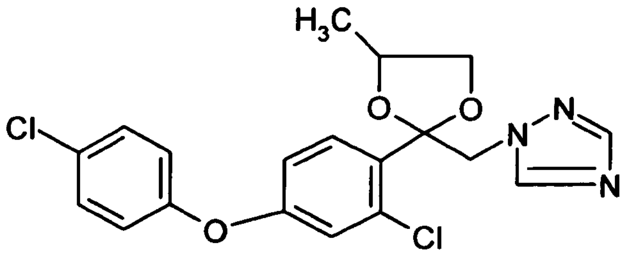

(VII)

oder
(8) Hexaconazole der Formel VIII

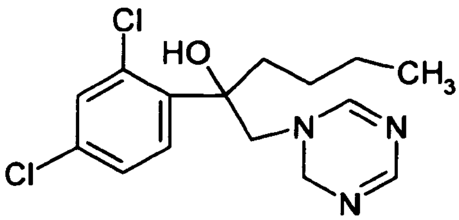

(VIII)

oder
(9) Cyproconazole der Formel IX

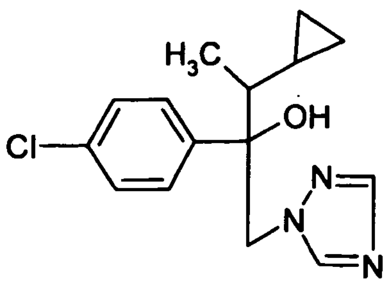

(IX)

oder
(10) Flusilazole der Formel X

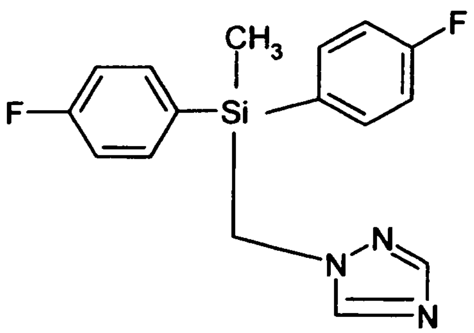

(X)

oder
(11) Tetraconazole der Formel XI

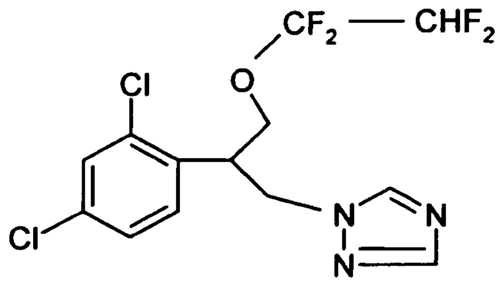

(XI)

oder

(12) Fenbuconazole der Formel XII

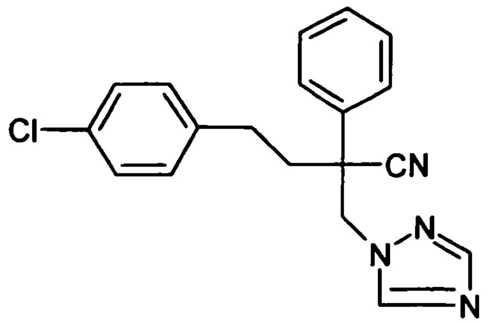

(XII)

oder

(14) Simeconazole der Formel XIV

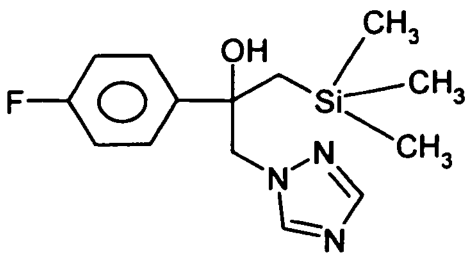

(XIV)

(15) Ipconazole der Formel XV

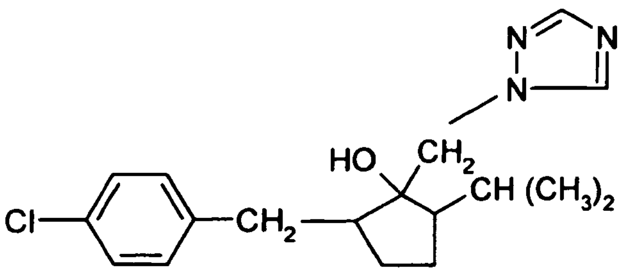

(XV)

oder

(16) Triticonazole der Formel XVI

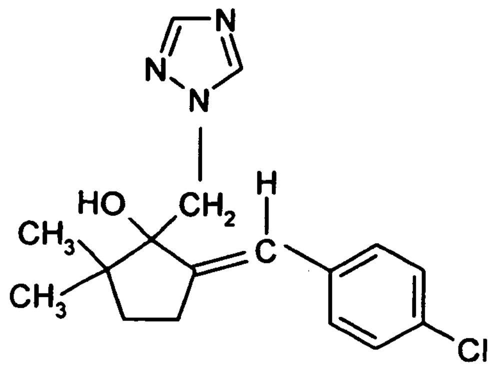

(XVI)

Das Prothioconazol der Formel 1, das 2-[2-(1-Chlorcyclopropyl)-3-(2-chlorphenyl)-2-hydroxypropyl]-2,4-dihydro-[1,2,4]-triazol-3-thion ist bereits aus der WO 96/16048 bekannt.

Aus der WO 98/47367 ist eine Reihe von Wirkstoffkombinationen von Prothioconazol mit einer Vielzahl anderer fungizider Verbindungen bekannt.

Epoxiconazole der Formel II and seine Verwendung als Pflanzenschutzmittel ist in der EP-B 0 196 038 beschrieben.

Auch Metconazole der Formel III ist bereits bekannt und in der EP-B 0 267 778 beschrieben.

Auch das Propiconazole der Formel IV ist bekannt und in der DE-A 2551560 beschrieben.

Das Fluquinconazole der Formel V ist in Pesticide Manual, 12 th Ed. (2000), Seite 449 beschrieben.

Das Penconazole der Formel VI ist in Pesticide Manual, 12 th Ed. (2000), Seite 712 beschrieben.

Das Difenconazole der Formel VII ist aus der EP-A-0 112 284 bekannt.

Das Hexaconazole der Formel VIII ist in der DE-A-30 42 303 beschrieben.

Das Cyproconazole der Formel IX ist in der DE-A-34 06 993 beschrieben.

Das Flusilazole der Formel X ist aus der EP-A-0 068 813 bekannt.

Das Tetraconazole der Formel XI ist aus der EP-A-0 234 242 bekannt.

Das Fenbuconazole der Formel XII ist in der DE-A-37 21 786 beschrieben.

Das Myclobutanil der Formel XIII ist in der EP-A-0 145 294 beschrieben.

Das Simeconazole der Formel XIV ist aus The BCPC Conference-Pests and Diseases 2000, S. 557-562 bekannt.

Das Ipconazol der Formel XV ist in der EP-A-0 267 778 beschrieben.

Das Triticonazole der Formel XVI ist in der EP-A-0 378 953 beschrieben.

Im Hinblick auf eine Senkung der Aufwandmengen und eine Verbesserung des Wirkungsspektrums der bekannten Verbindungen lagen der vorliegenden Erfindung Mischungen als Aufgabe zugrunde, die bei verringerter Gesamtmenge an ausgebrachten Wirkstoffen eine verbesserte Wirkung gegen Schadpilze aufweisen (synergistische Mischungen).

Demgemäß wurde die eingangs definierte Mischung von Prothioconazol mit Myclobutanil gefunden. Es wurde außerdem gefunden, daß sich bei gleichzeitiger, und zwar gemeinsamer oder getrennter Anwendung der Verbindung I mit der Verbindung XIII oder bei Anwendung der Verbindung I mit der Verbindung XIII nacheinander Schadpilze besser bekämpften lassen, als mit den Einzelverbindungen allein.

Das 2-[2-(1-Chlorcyclopropyl)-3-(2-chlorphenyl)-2-hydroxypropyl]-2,4-dihydro-[1,2,4]-triazol-3-thion (Prothioconazole) der Formel I ist aus der WO 96-16 048 bekannt. Die Verbindung kann in der "Thiono"-Form der Formel

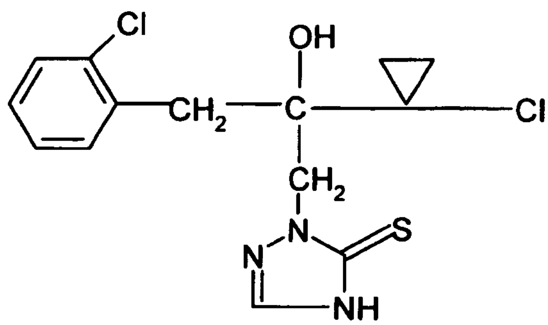

(I)

oder in der tautomeren "Mercapto"-Form der Formel

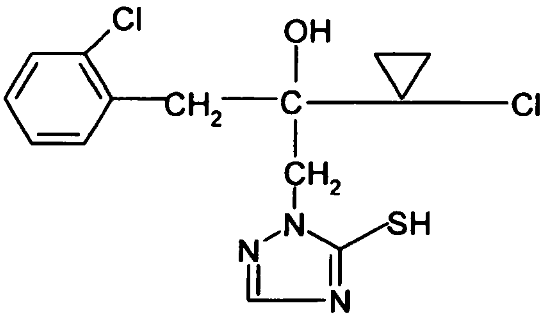

(Ia)

vorliegen. Der Einfachheit halber wird jeweils nur die "Thiono"-Form aufgeführt.

Das Myclobutanil der Formel XIII

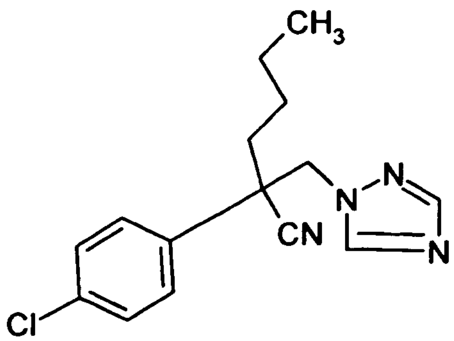

(XIII)

ist in der EP-A-0 145 294 beschrieben.

Die Verbindungen I und XIII sind wegen des basischen Charakters der in ihnen enthaltenen Stickstoffatome in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder - disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt sind auch Dreiermischungen von Prothioconazol mit Myclobutanil sowie einem weiteren Triazol ausgewählt aus:

(2) Epoxiconazole der Formel II

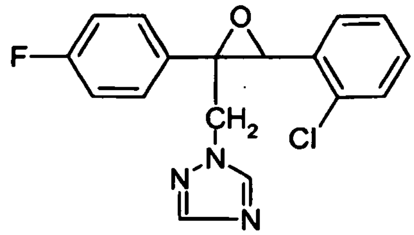

(II)

(3) Metconazole der Formel III

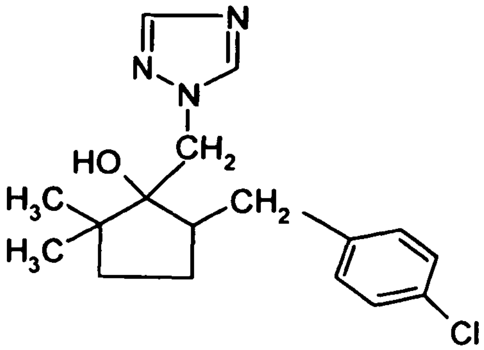

(III)

oder
(4) Propiconazole der Formel IV

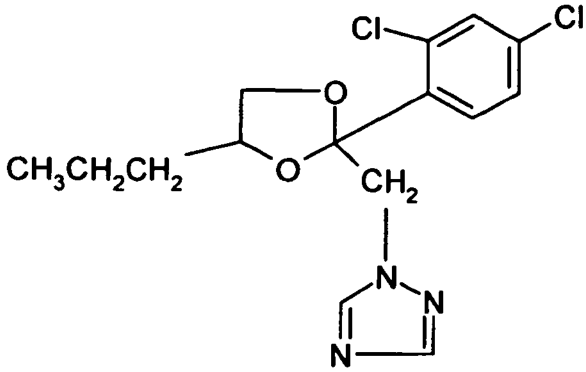

(IV)

oder
(5) Fluquinconazole der Formel V

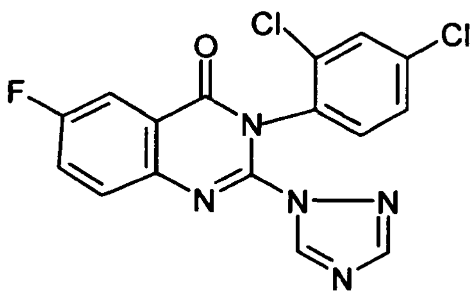

(V)

oder
(6) Penconazole der Formel VI

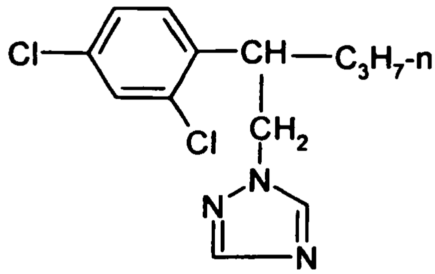

(VI)

oder

(7) Difenconazole der Formel VII

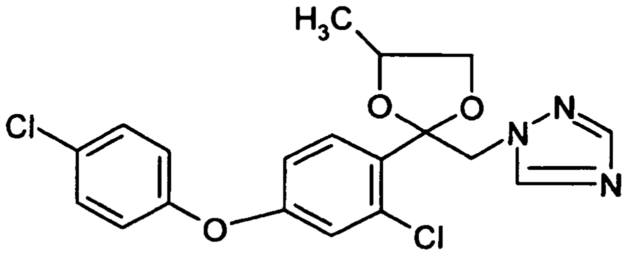

(VII)

oder

(8) Hexaconazole der Formel VIII

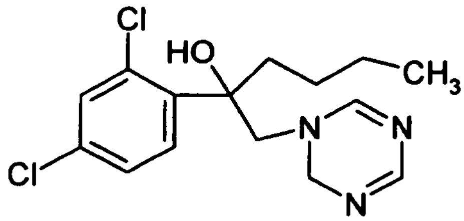

(VIII)

oder

(9) Cyproconazole der Formel IX

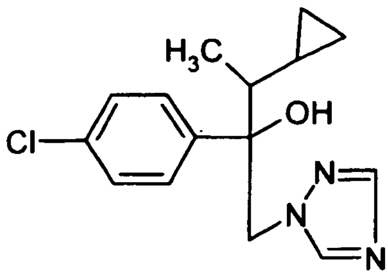

(IX)

oder

(10) Flusilazole der Formel X

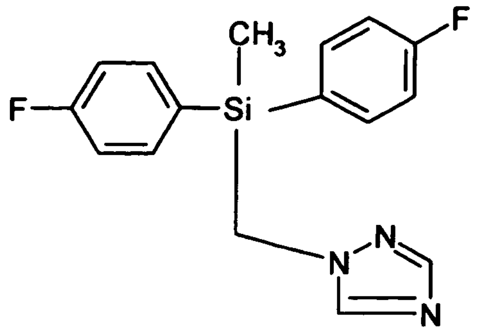

(X)

oder

(11) Tetraconazole der Formel XI

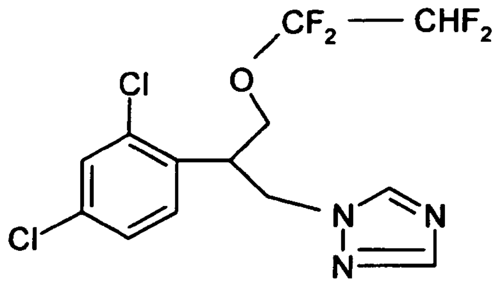

(XI)

oder

(12) Fenbuconazole der Formel XII

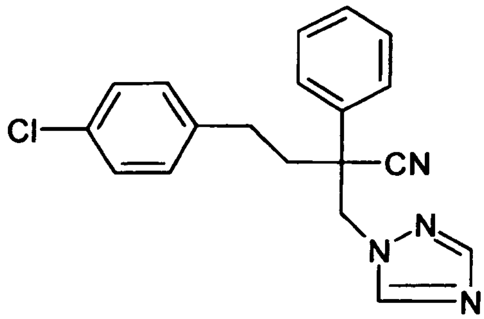

(XII)

oder

(14) Simeconazole der Formel XIV

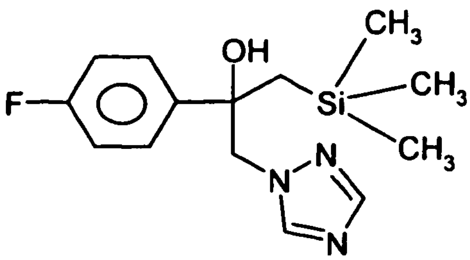

(XIV)

(15) Ipconazole der Formel XV

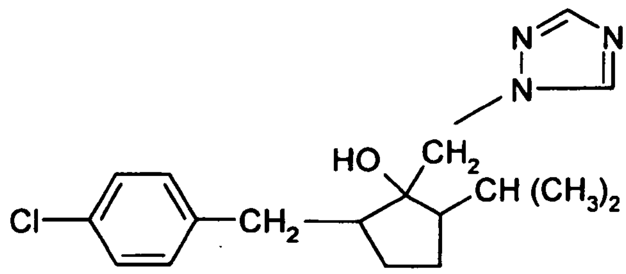

(XV)

oder

(16) Triticonazole der Formel XVI

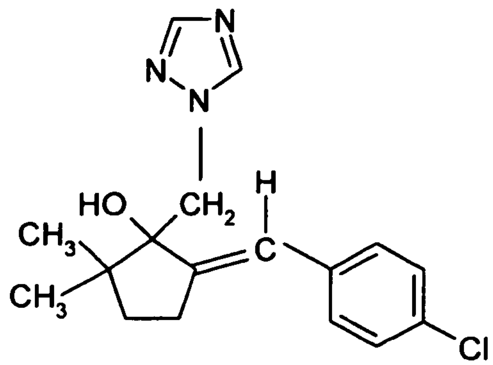

(XVI)

Bevorzugt setzt man bei der Bereitstellung der Mischungen die reinen Wirkstoffe ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischung aus der Verbindung I mit der Verbindung XIII bzw. die Mischungen aus der Verbindung I und der Verbindung XIII mit einem der oben erwähnten, weiteren Triazole bzw. die Verbindung I mit der Verbindung XIII bzw. die Verbindung I, Verbindung XIII sowie das oben erwähnte, weitere Triazol gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Blumeria graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Sie sind außerdem im Materialschutz (z.B. Holzschutz) anwendbar, beispielsweise gegen Paecilomyces variotii.

Die Verbindung I und Verbindung XIII bzw. die Verbindung I, XIII und eines der oben erwähnten, weiteren Triazole können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 20:1 bis 1:20, insbesondere 10:1 bis 1:10, vorzugsweise 5:1 bis 1:5 angewendet.

Die Verbindungen I und III werden üblicherweise in einem Gewichtsverhältnis von 20:1 bis 1:20, insbesondere 10:1 bis 1:10, vorzugsweise 5:1 bis 1:5 angewendet.

Die Verbindungen I und IV werden üblicherweise in einem Gewichtsverhältnis von 20:1 bis 1:20, insbesondere 10:1 bis 1:10, vorzugsweise 5:1 bis 1:5 angewendet.

Die Verbindungen I und V werden üblicherweise in einem Gewichtsverhältnis von 20:1 bis 1:20, insbesondere 10:1 bis 1:10, vorzugsweise 5:1 bis 1:5 angewendet.
Die Verbindungen I und VI werden üblicherweise in einem Gewichtsverhältnis von 20:1 bis 1:20, insbesondere 10:1 bis 1:10, vorzugsweise 5:1 bis 1:5 angewendet.
Die Verbindungen I und VII werden üblicherweise in einem Gewichtsverhältnis von 20:1 bis 1:20, insbesondere 10:1 bis 1:10, vorzugsweise 5:1 bis 1:5 angewendet.
Die Verbindungen I und VIII werden üblicherweise in einem Gewichtsverhältnis von 20:1 bis 1:20, insbesondere 10:1 bis 1:10, vorzugsweise 5:1 bis 1:5 angewendet.
Die Verbindungen I und IX werden üblicherweise in einem Gewichtsverhältnis von 20:1 bis 1:20, insbesondere 10:1 bis 1:10, vorzugsweise 5:1 bis 1:5 angewendet.
Die Verbindungen I und X werden üblicherweise in einem Gewichtsverhältnis von 20:1 bis 1:20, insbesondere 10:1 bis 1:10, vorzugsweise 5:1 bis 1:5 angewendet.
Die Verbindungen I und XI werden üblicherweise in einem Gewichtsverhältnis von 20:1 bis 1:20, insbesondere 10:1 bis 1:10, vorzugsweise 5:1 bis 1:5 angewendet.
Die Verbindungen I und XII werden üblicherweise in einem Gewichtsverhältnis von 20:1 bis 1:20, insbesondere 10:1 bis 1:10, vorzugsweise 5:1 bis 1:5 angewendet.
Die Verbindungen I und XIII werden üblicherweise in einem Gewichtsverhältnis von 20:1 bis 1:20, insbesondere 10:1 bis 1:10, vorzugsweise 5:1 bis 1:5 angewendet.
Die Verbindungen I und XIV werden üblicherweise in einem Gewichtsverhältnis von 20:1 bis 1:20, insbesondere 10:1 bis 1:10, vorzugsweise 5:1 bis 1:5 angewendet.
Die Verbindungen I und XV werden üblicherweise in einem Gewichtsverhältnis von 20:1 bis 1:20, insbesondere 10:1 bis 1:10, vorzugsweise 5:1 bis 1:5 angewendet.
Die Verbindungen I und XVI werden üblicherweise in einem Gewichtsverhältnis von 20:1 bis 1:20, insbesondere 10:1 bis 1:10, vorzugsweise 5:1 bis 1:5 angewendet.
Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,1 bis 3,0 kg/ha.
Die Aufwandmengen liegen dabei für die Verbindungen I bei 0,01 bis 1 kg/ha, vorzugsweise 0,05 bis 0,5 kg/ha, insbesondere 0,05 bis 0,3 kg/ha.
Die Aufwandmengen für die Verbindungen II liegen entsprechend bei 0,01 bis 1 kg/ha, vorzugsweise 0,02 bis 0,5 kg/ha, insbesondere 0,05 bis 0,3 kg/ha.
Die Aufwandmengen für die Verbindungen III liegen entsprechend bei 0,01 bis 1 kg/ha, vorzugsweise 0,02 bis 0,5 kg/ha, insbesondere 0,05 bis 0,3 kg/ha.
Die Aufwandmengen für die Verbindungen IV liegen entsprechend bei 0,01 bis 1 kg/ha, vorzugsweise 0,02 bis 0,5 kg/ha, insbesondere 0,05 bis 0,3 kg/ha.
Die Aufwandmengen für die Verbindungen V liegen entsprechend bei 0,01 bis 1 kg/ha, vorzugsweise 0,02 bis 0,5 kg/ha, insbesondere 0,05 bis 0,3 kg/ha.
Die Aufwandmengen für die Verbindungen VI liegen entsprechend bei 0,01 bis 1 kg/ha, vorzugsweise 0,02 bis 0,5 kg/ha, insbesondere 0,05 bis 0,3 kg/ha.
Die Aufwandmengen für die Verbindungen V liegen entsprechend bei 0,01 bis 1 kg/ha, vorzugsweise 0,02 bis 0,5 kg/ha, insbesondere 0,05 bis 0,3 kg/ha.
Die Aufwandmengen für die Verbindungen VII liegen entsprechend bei 0,01 bis 1 kg/ha, vorzugsweise 0,02 bis 0,5 kg/ha, insbesondere 0,05 bis 0,3 kg/ha.
Die Aufwandmengen für die Verbindungen VIII liegen entsprechend bei 0,01 bis 1 kg/ha, vorzugsweise 0,02 bis 0,5 kg/ha, insbesondere 0,05 bis 0,3 kg/ha.
Die Aufwandmengen für die Verbindungen IX liegen entsprechend bei 0,01 bis 1 kg/ha, vorzugsweise 0,02 bis 0,5 kg/ha, insbesondere 0,05 bis 0,3 kg/ha.
Die Aufwandmengen für die Verbindungen X liegen entsprechend bei 0,01 bis 1 kg/ha, vorzugsweise 0,02 bis 0,5 kg/ha, insbesondere 0,05 bis 0,3 kg/ha.
Die Aufwandmengen für die Verbindungen XI liegen entsprechend bei 0,01 bis 1 kg/ha, vorzugsweise 0,02 bis 0,5 kg/ha, insbesondere 0,05 bis 0,3 kg/ha.
Die Aufwandmengen für die Verbindungen XII liegen entsprechend bei 0,01 bis 1 kg/ha, vorzugsweise 0,02 bis 0,5 kg/ha, insbesondere 0,05 bis 0,3 kg/ha.
Die Aufwandmengen für die Verbindungen XIII liegen entsprechend bei 0,01 bis 1 kg/ha, vorzugsweise 0,02 bis 0,5 kg/ha, insbesondere 0,05 bis 0,3 kg/ha.
Die Aufwandmengen für die Verbindungen XIV liegen entsprechend bei 0,01 bis 1 kg/ha, vorzugsweise 0,02 bis 0,5 kg/ha, insbesondere 0,05 bis 0,3 kg/ha.
Die Aufwandmengen für die Verbindungen XV liegen entsprechend bei 0,01 bis 1 kg/ha, vorzugsweise 0,02

bis 0,5 kg/ha, insbesondere 0,05 bis 0,3 kg/ha.

Die Aufwandmengen für die Verbindungen XVI liegen entsprechend bei 0,01 bis 1 kg/ha, vorzugsweise 0,02 bis 0,5 kg/ha, insbesondere 0,05 bis 0,3 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindung I und der Verbindung XIII bzw. der Verbindung I und Verbindung XIII mit einem der oben erwähnten, weiteren Triazole oder der Mischungen aus der Verbindung I mit der Verbindung XIII bzw. der Verbindung I und Verbindung XIII mit einem der oben erwähnten, weiteren Triazole durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindung I und die Verbindung XIII (sowie Verbindung I und Verbindung XIII mit einem der oben erwähnten, weiteren Triazole)können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol - oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindung I und der Verbindung XIII bzw. der Mischung aus der Verbindung I und Verbindung XIII mit einem der oben erwähnten, weiteren Triazole oder der Mischung aus der Verbindung I mit der Verbindung XIII bzw. der Mischung aus der Verbindung I und Verbindung XIII mit einem der oben erwähnten, weiteren Triazole mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% der Verbindung I und der Verbindung XIII (oder der Mischung aus der Verbindung I mit der Verbindung XIII mit einem der oben erwähnten, weiteren Triazole) bzw. der Mischung aus der Verbindung I mit der Verbindung XIII (oder der Mischung aus der Verbindung I mit der Verbindung XIII mit einem der oben erwähnten, weiteren Triazole). Die Wirkstoffe werden dabei in einer Reinheit von 90% bis 100%, vorzugsweise 95% bis 100% (nach NMR- oder HPLC-Spektrum) eingesetzt.

Die Anwendung der Mischung aus Verbindungen I und XIII bzw. der Mischung aus der Verbindung I mit der Verbindung XIII mit einem der oben erwähnten, weiteren Triazole oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindung I mit der Verbindung XIII bzw. der Mischung aus der Verbindung I mit der Verbindung XIII mit einem der oben erwähnten, weiteren Triazole bei getrennter Ausbringung, behandelt.

Die Anwendung kann vor oder nach dem Befall durch die Schadpilze erfolgen.

Anwendungsbeispiel

Die synergistische Wirkung der erfindungsgemäßen Mischungen ließ sich durch die folgenden Versuche zeigen:

Die Wirkstoffe wurden getrennt oder gemeinsam als 10%ige Emulsion in einem Gemisch aus 85 Gew.-% Cyclohexanon und 5 Gew.-% Emulgator aufbereitet und entsprechend der gewünschten Konzentration mit Wasser

verdünnt.

Die Auswertung erfolgte durch Feststellung der befallenen Blattflächen in Prozent. Diese Prozent-Werte wurden in Wirkungsgrade umgerechnet. Der Wirkungsgrad (W) wurde nach der Formel von Abbot wie folgt bestimmt:

$$W = (1 - \frac{\alpha}{\beta}) \cdot 100$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Anwendungsbeispiel 1: Wirksamkeit gegen Weizenmehltau verursacht durch *Erysiphe [syn. Blumeria] graminis forma* specialis. *tritici*

Blätter von in Töpfen gewachsenen Weizenkeimlingen der Sorte "Kanzler" wurden mit wässriger Suspension in der unten angegebenen Wirkstoffkonzentration bis zur Tropf-nässe besprüht. Die Suspension oder Emulsion wurde aus einer Stammlösung angesetzt mit 10 % Wirkstoff in einer Mischung bestehend aus 70 % Cyclohexanon, 20 % Benetzungsmittel und 10 % Emulgiermittel. 24 Stunden nach dem Antrocknen des Spritzbelages mit Sporen des Weizenmehltaus (*Erysiphe [syn. Blumeria] graminis* forma specialis. *tritici*) bestäubt. Die Versuchspflanzen wurden anschließend im Gewächshaus bei Temperaturen zwischen 20 und 24_ C und 60 bis 90 % relativer Luftfeuchtigkeit aufgestellt. Nach 7 Tagen wurde das Ausmaß der Mehltauentwicklung visuell in % Befall der gesamten Blattfläche ermittelt.

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der oben genannten Colby-Formel ermittelt und mit den beobachteten Wirkungsgraden verglichen.

Tabelle 1

| Wirkstoff | Wirkstoffkonzentration in der Spritzbrühe in ppm | Wirkungsgrad in % der unbehandelten Kontrolle |
|---|---|---|
| Kontrolle (unbehandelt) | (90 % Befall) | 0 |
| Verbindung I = Prothioconazol | 4 | 56 |
| | 1 | 0 |
| | 0,25 | 0 |
| | 0,06 | 0 |
| | 0,015 | 0 |

(fortgesetzt)

| Wirkstoff | Wirkstoffkonzentration in der Spritzbrühe in ppm | Wirkungsgrad in % der unbehandelten Kontrolle |
|---|---|---|
| Verbindung XIII = Myclobutanil | 4<br>1<br>0,06 | 56<br>11<br>0 |

Tabelle 2

| Erfindungsgemäße Kombinationen | beobachteter Wirkungsgrad | Berechneter Wirkungsgrad*) |
|---|---|---|
| Verbindung I = Prothioconazol + Verbindung XIII = Myclobutanil 0,25 + 4 ppm<br>Mischung 1 : 16 | 67 | 56 |
| Verbindung I = Prothioconazol + Verbindung XIII = Myclobutanil 0,25 + 1 ppm<br>Mischung 1 : 4 | 22 | 11 |
| Verbindung I = Prothioconazol + Verbindung XIII = Myclobutanil 4 + 1 ppm<br>Mischung 4 : 1 | 89 | 60 |
| Verbindung = Prothioconazol + Verbindung XIII = Myclobutanil 1 + 0,06 ppm<br>Mischung 16 : 1 | 22 | 0 |
| *) berechneter Wirkungsgrad nach der Colby-Formel | | |

Aus den Ergebnissen des Versuches geht hervor, daß der beobachtete Wirkungsgrad in allen Mischungsverhältnissen höher ist, als nach der Colby-Formel vorausberechnete Wirkungsgrad (aus Synerg 173. XLS).

**Patentansprüche**

**1.** Fungizide Mischung, enthaltend

(1) 2-[2-(1-Chlorcyclopropyl)-3-(2-chlorphenyl)-2-hydroxypropyl]-2,4-dihydro-[1,2,4]-triazol-3-thion (Prothioconazol) der Formel I oder dessen Salze oder Addukte

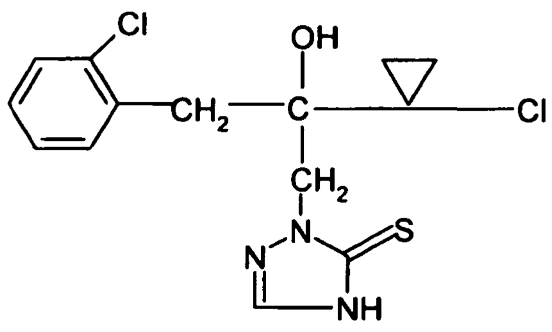

(I)

und

(13) Myclobutanil der Formel XIII

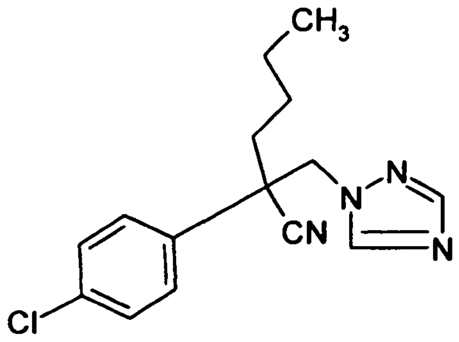

(XIII)

oder dessen Salze oder Addukte
in einer synergistisch wirksamen Menge.

2. Fungizide Mischung nach Anspruch 1, **dadurch gekennzeichnet, dass** das Gewichtsverhältnis von Prothioconazole der Formel I zu Myclobutanil der Formel XIII 20 : 1 bis 1 : 20 beträgt.

3. Fungizide Mischung nach Anspruch 1 oder 2 enthaltend ein weiteres Triazol ausgewählt aus der Gruppe bestehend aus:

(2) Epoxiconazole der Formel II

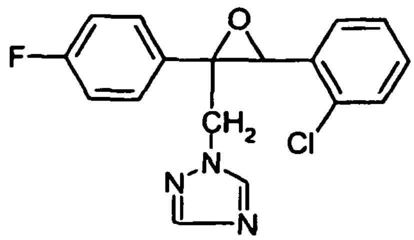

(II)

oder
(3) Metconazole der Formel III

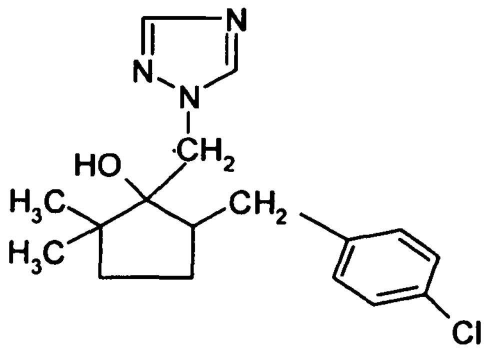

(III)

oder
(4) Propiconazole der Formel IV

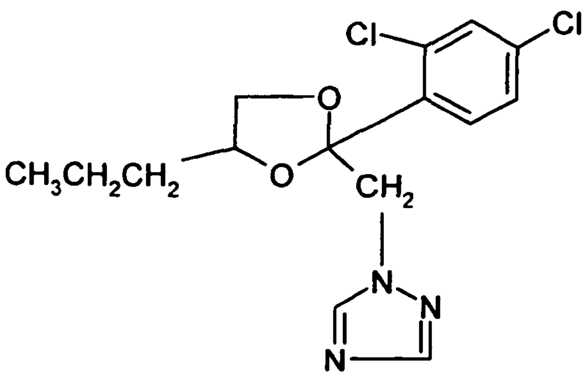

(IV)

oder
(5) Fluquinconazole der Formel V

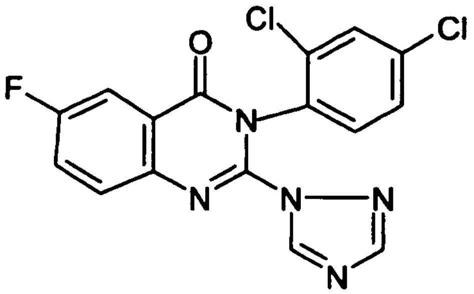

(V)

oder
(6) Penconazole der Formel VI

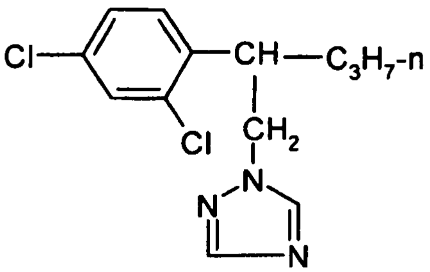

(VI)

oder
(7) Difenconazole der Formel VII

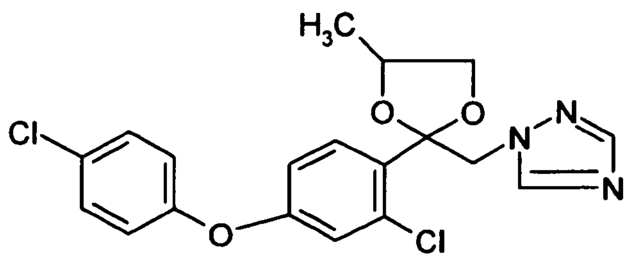

(VII)

oder
(8) Hexaconazole der Formel VIII

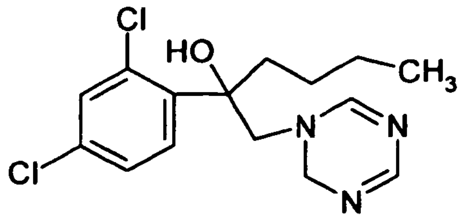

(VIII)

oder

(9) Cyproconazole der Formel IX

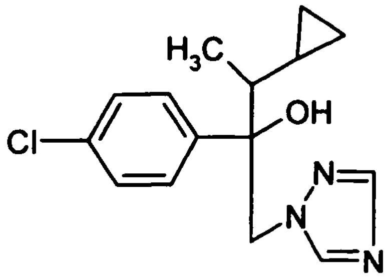

(IX)

oder

(10) Flusilazole der Formel X

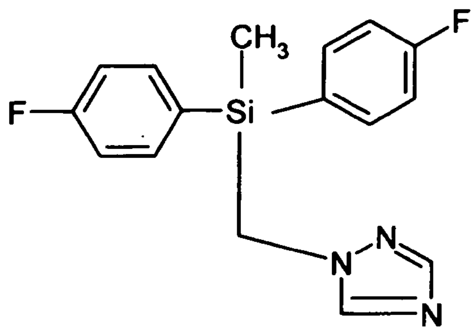

(X)

oder

(11) Tetraconazole der Formel XI

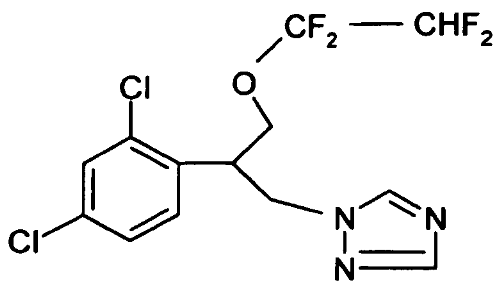

(XI)

oder

(12) Fenbuconazole der Formel XII

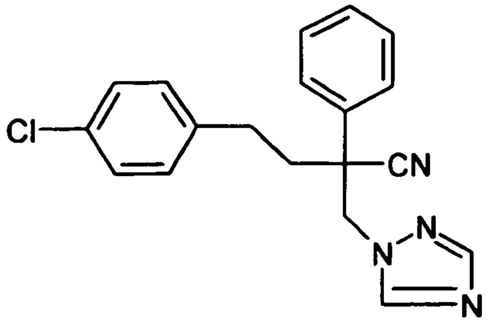

(XII)

oder

(14) Simeconazole der Formel XIV

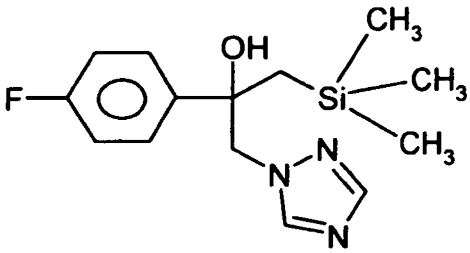

(XIV)

oder

(15) Ipconazole der Formel XV

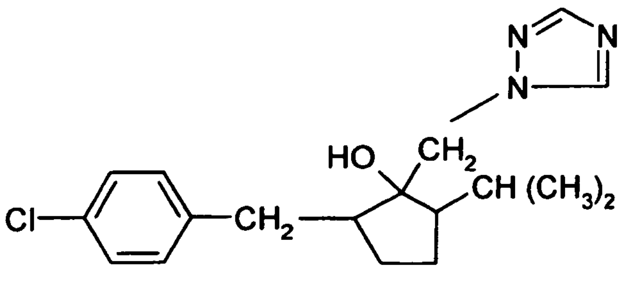

(XV)

oder

(16) Triticonazole der Formel XVI

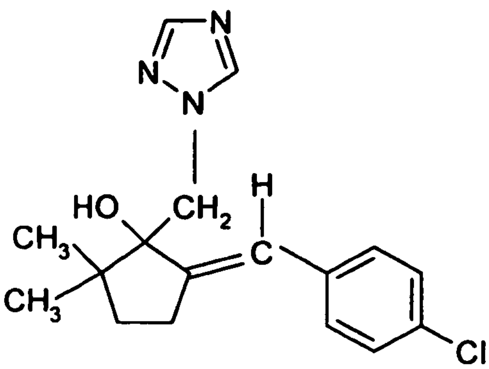

(XVI)

**4.** Nicht therapeutisches Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit der fungiziden Mischung gemäß einem der Ansprüche 1 bis 3 behandelt.

**5.** Verfahren nach Anspruch 4, **dadurch gekennzeichnet, daß** man die Verbindung der Formel I gemäß Anspruch 1 und eine Verbindung der Formel XIII gemäß Anspruch 1 oder die Verbindung der Formel I, Formel XIII und das weitere Triazol gemäß Anspruch 3 gleichzeitig, und zwar gemeinsam oder getrennt, oder nacheinander ausbringt.

**6.** Verfahren nach Anspruch 4 oder 5, **dadurch gekennzeichnet, daß** man die fungizide Mischung oder die Verbindung der Formel I mit einer Verbindung der Formel XIII gemäß Anspruch 1 oder die Verbindung der Formel I, Formel XIII und das weitere Triazol gemäß Anspruch 3 in einer Menge von 0,01 bis 8 kg/ha aufwendet.

**7.** Verfahren nach Anspruch 4 oder 5, **dadurch gekennzeichnet, daß** Saatgut mit der fungiziden Mischung gemäß einem der Ansprüche 1 bis 3 in einer Menge von 0,001 bis 250 g/kg Saatgut behandelt wird.

**8.** Fungizide Mittel, enthaltend die fungizide Mischung gemäß einem der Ansprüche 1 bis 4 sowie einen festen oder flüssigen Träger.

**Claims**

**1.** A fungicidal mixture, comprising

(1) 2-[2-(1-chlorocyclopropyl)-3-(2-chlorophenyl)-2-hydroxypropyl]-2,4-dihydro-[1,2,4]-triazole-3-thione (prothioconazole) of the formula I or a salt or adduct thereof

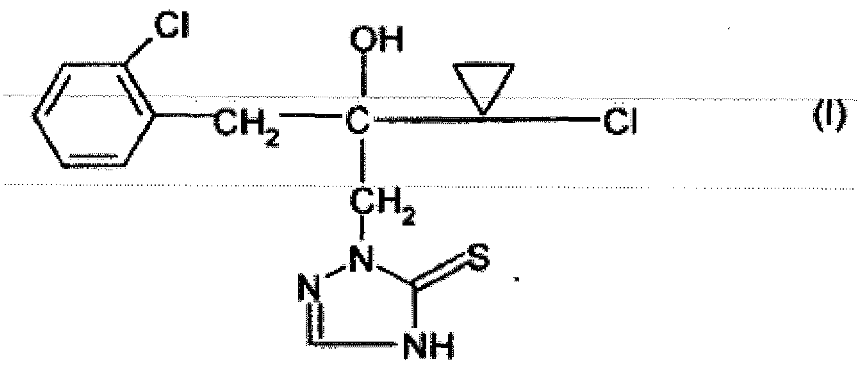

(I)

and
(13)myclobutanil of the formula XIII

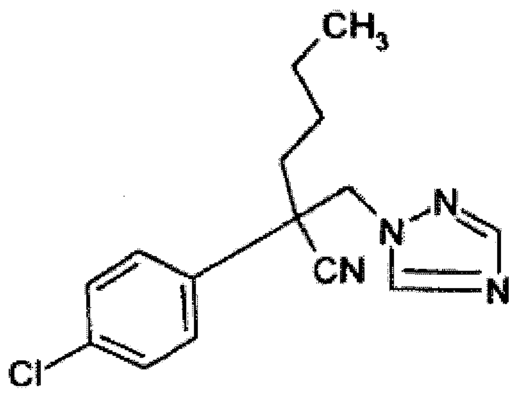

(XIII)

or a salt or adduct thereof
in a synergistically effective amount.

**2.** A fungicidal mixture according to claim 1, wherein the weight ratio of prothioconazole of the formula I to myclobutanil of the formula XIII is from 20:1 to 1:20.

**3.** A fungicidal mixture according to claim 1 or 2 comprising a further triazole selected from the group consisting of:

(2) epoxiconazole of the formula II

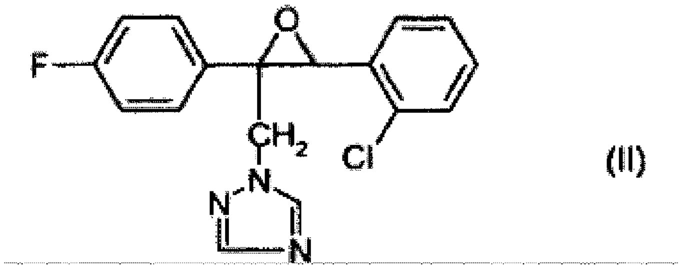

(II)

and

(3) metconazole of the formula III

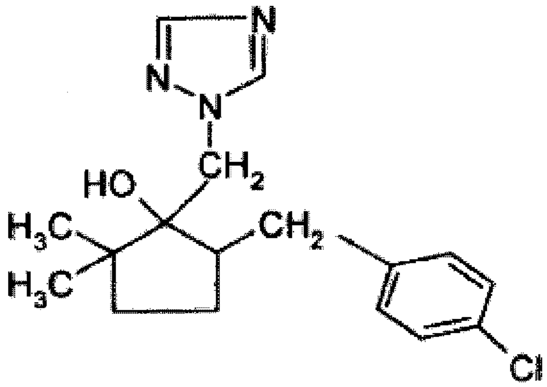

(III)

and

(4) propiconazole of the formula IV

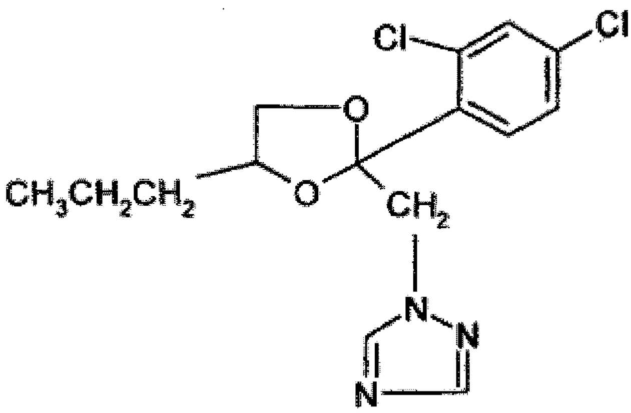

(IV)

and

(5) fluquinconazole of the formula V

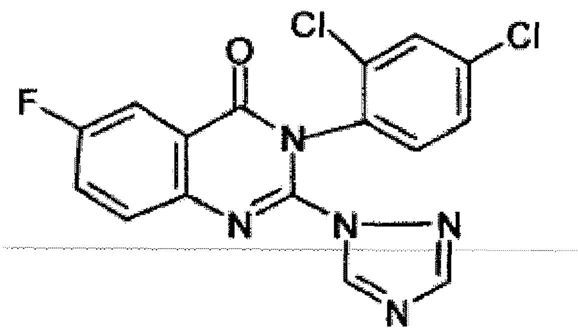

(V)

and

(6) penconazole of the formula VI

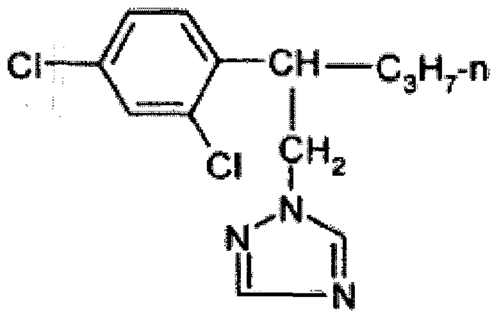

(VI)

and

(7) difenconazole of the formula VII

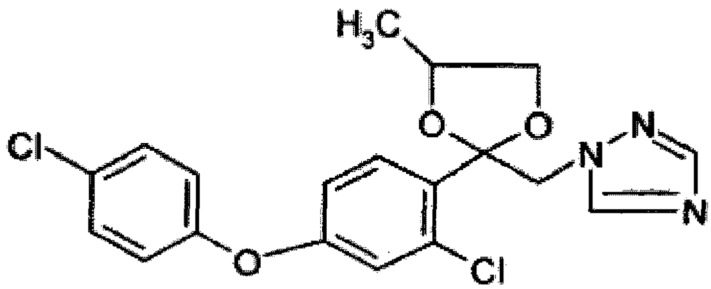

(VII)

and

(8) hexaconazole of the formula VIII

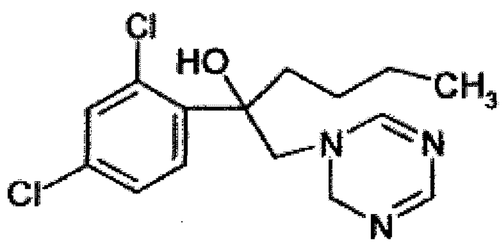

(VIII)

and

(9) cyproconazole of the formula IX

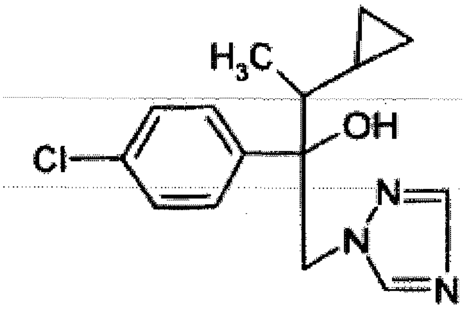

(IX)

and
(10) flusilazole of the formula X

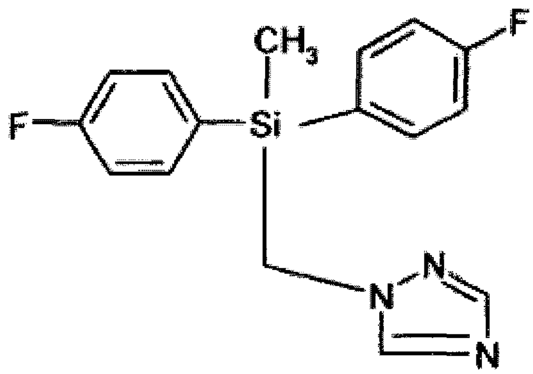

(X)

and
(11) tetraconazole of the formula XI

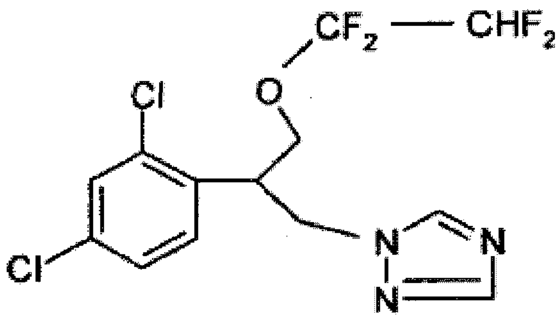

(XI)

and
(12) fenbuconazole of the formula XII

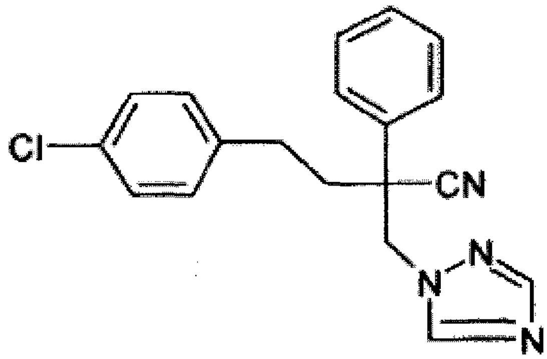

(XII)

and
(14) simeconazole of the formula XIV

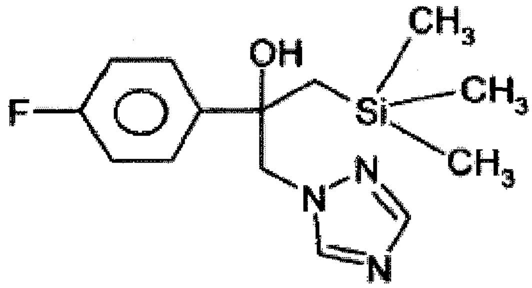

(XIV)

and
(15) ipconazole of the formula XV

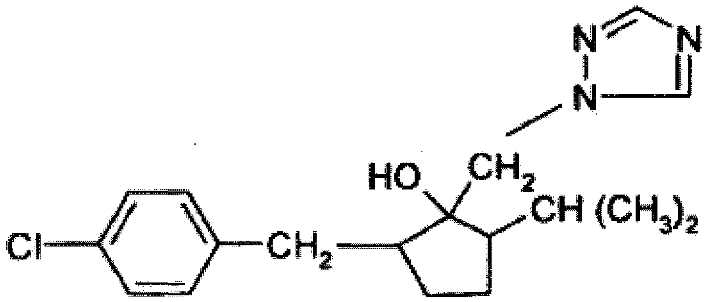

(XV)

and
(16)triticonazole of the formula XVI

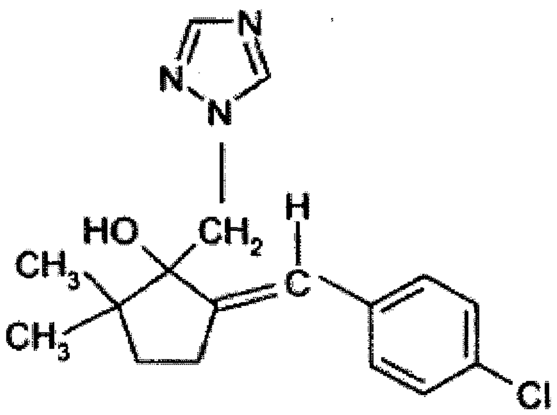

(XVI)

4. A nontherapeutic method for controlling harmful fungi, which comprises treating the harmful fungi, their habitat or the plants, seeds, soils, areas, materials or spaces to be kept free from them with a fungicidal mixture according to any of claims 1 to 3.

5. The method according to claim 4, wherein the compound of the formula I as set forth in claim 1 and a compound of the formula XIII as set forth in claim 1 or the compound of the formula I, formula XIII and the further triazole according to claim 3 are applied simultaneously, i.e. together or separately, or successively.

6. The process according to claim 4 or 5, wherein the fungicidal mixture or the compound of the formula I and a compound of the formula XIII as set forth in claim 1 or the compound of the formula I, formula XIII and the further triazole according to claim 3 is/are applied in an amount of from 0.01 to 8 kg/ha.

7. The process according to claim 4 or 5, wherein seed is treated with a fungicidal mixture according to any of claims 1 to 3 in an amount of 0.001 to 250 g/kg of seed.

8. A fungicidal composition, comprising the fungicidal mixture according to any of claims 1 to 4 and a solid or liquid carrier.

**Revendications**

1. Mélange fongicide contenant

(1) de la 2-[2-(1-chlorocyclopropyl)-3-(2-chlorophényl)-2-hydroxypropyl]-2,4-dihydro-[1,2,4]-triazol-3-thione (prothioconazole) de formule I ou ses sels ou produits d'addition

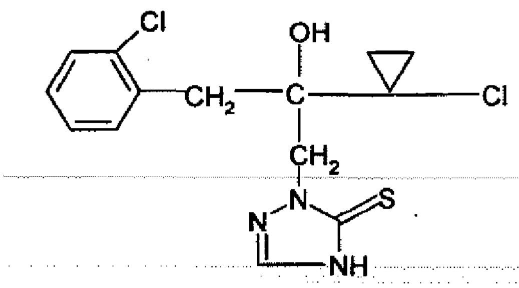

(I)

et
(13) le myclobutanil de formule XIII

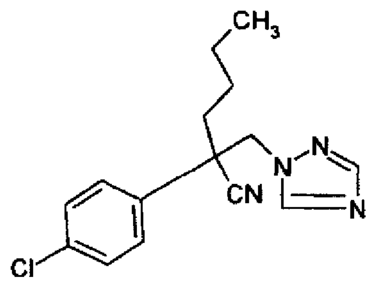

(XIII)

ou des sels ou produits d'addition en une quantité synergiquement active.

**2.** Mélange fongicide selon la revendication 1, **caractérisé en ce que** le rapport pondéral de prothioconazole de formule I à myclobutanil de formule XIII est de 20:1 à 1:20.

**3.** Mélange fongicide selon la revendication 1 ou 2, contenant un autre triazole, choisi dans le groupe constitué par :

(2) l'époxiconazole de formule II

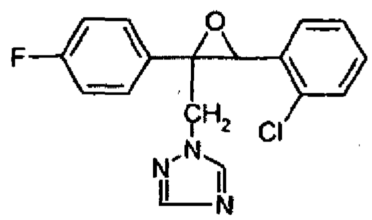

(II)

ou
(3) le metconazole de formule III

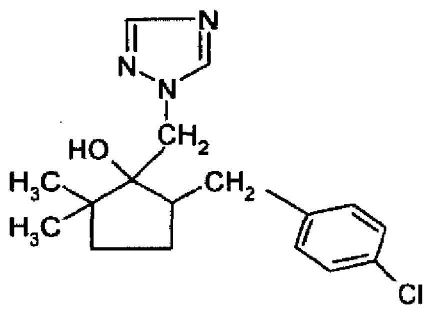

(III)

ou
(4) le propiconazole de formule IV

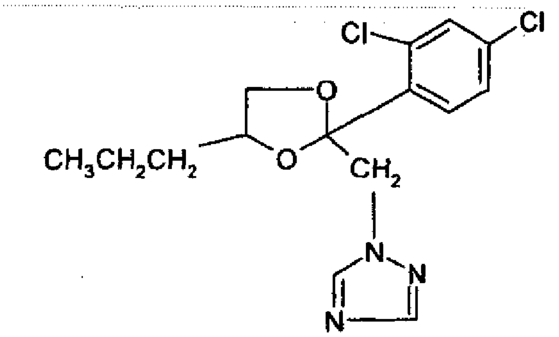

(IV)

ou

(5) de la fluquinconazole de formule V

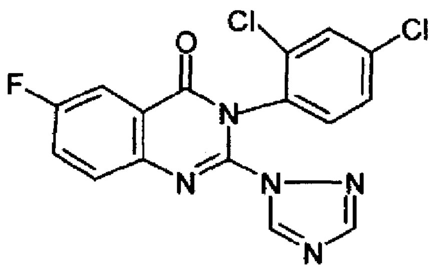

(V)

ou

(6) le penconazole de formule VI

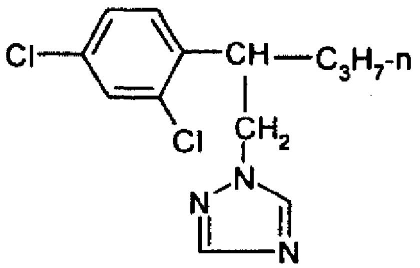

(VI)

ou

(7) le difenconazole de formule VII

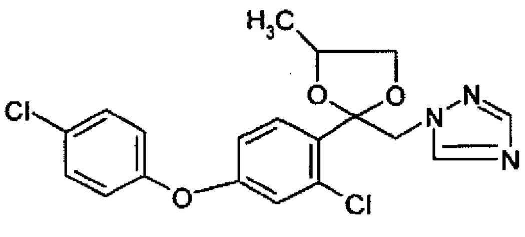

(VII)

ou

(8) l'hexaconazole de formule VIII

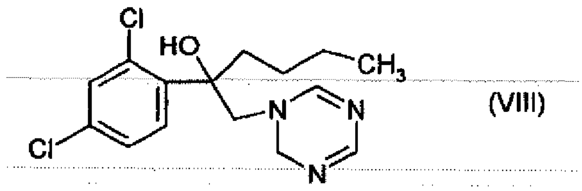

(VIII)

ou

(9) le cyproconazole de formule IX

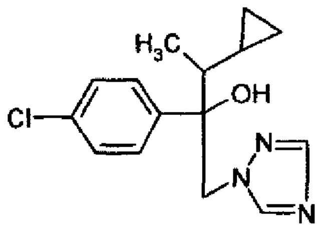

(IX)

ou

(10) le flusilazole de formule X

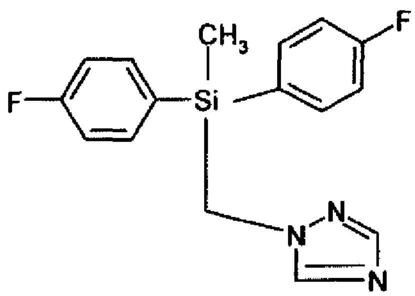

(X)

ou

(11) le tétraconazole de formule XI

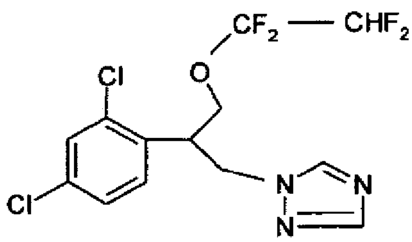

(XI)

ou

(12) le fenbuconazole de formule XII

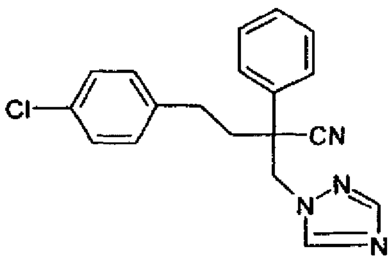

(XII)

ou
(14) le simeconazole de formule XIV

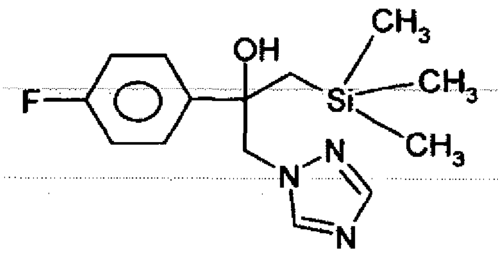

(XIV)

ou
(15) l'ipconazole de formule XV

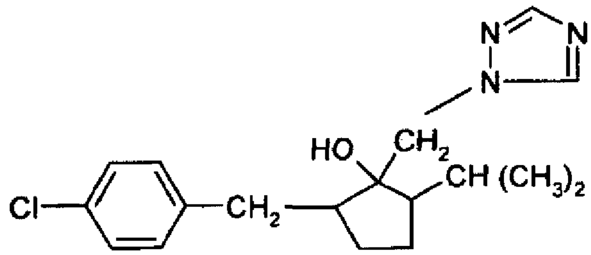

(XV)

ou
(16) le triticonazole de formule XVI

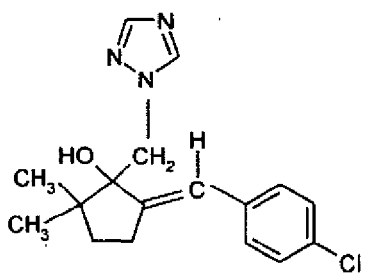

(XVI)

.

4. Procédé non thérapeutique pour lutter contre des champignons nuisibles, **caractérisé en ce qu'**on traite les champignons nuisibles, leur espace de vie ou les plantes, semences, sols, surfaces, matériaux ou espaces à protéger contre lesdits champignons nuisibles avec le mélange fongicide selon l'une quelconque des revendications 1 à 3.

5. Procédé selon la revendication 4, **caractérisé en ce qu'**on applique le composé de formule I selon la revendication 1 et un composé de formule XIII selon la revendication 1 ou le composé de formule I, de formule XIII et l'autre triazole selon la revendication 3 simultanément, c'est-à-dire ensemble ou séparément, ou consécutivement.

6. Procédé selon la revendication 4 ou 5, **caractérisé en ce qu'**on applique le mélange fongicide ou le composé de formule I avec un composé de formule XIII selon la revendication 1 ou le composé de formule I, de formule XIII et l'autre triazole selon la revendication 3 en une quantité de 0,01 à 8 kg/ha.

7. Procédé selon la revendication 4 ou 5, **caractérisé en ce qu'**on traite les semences avec un mélange fongicide selon l'une quelconque des revendications 1 à 3 en une quantité de 0,001 à 250 g/kg de semences.

8. Agent fongicide, contenant le mélange fongicide selon l'une quelconque des revendications 1 à 4 ainsi qu'un support solide ou liquide.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9616048 A
- WO 9847367 A
- EP 0196038 B
- EP 0267778 B
- DE 2551560 A
- EP 0112284 A
- DE 3042303 A
- DE 3406993 A
- EP 0068813 A
- EP 0234242 A
- DE 3721786 A
- EP 0145294 A
- EP 0267778 A
- EP 0378953 A


### In der Beschreibung aufgeführte Nicht-Patentliteratur


- Pesticide Manual. 2000, 449
- Pesticide Manual. 2000, 712
- *The BCPC Conference-Pests and Diseases,* 2000, 557-562
- **R.S. COLBY.** *Weeds,* 1967, vol. 15, 20-22